# EUROPEAN PATENT APPLICATION

(11) **EP 3 270 019 A1**
(43) Date of publication of application: **17.01.2018**
(21) Application number: 16382329.7
(22) Date of filing: 11.07.2016
(51) Int. Cl.: F16K 11/078

(54) **MIXING CARTRIDGE WITH FLOW RATE LIMITATION**

(71) Applicant: Sedal, S.L., 08740 Sant Andreu De La Barca (ES)
(72) Inventor: GILI MARTÍNEZ, Sergi, 08035 BARCELONA (ES)
(74) Representative: Oficina Ponti, SLP

(57) **Abstract**

The mixing cartridge with flow rate limitation comprises displacement limiting means for:
- blocking movement of the actuation lever (5) at an intermediate position at which inflow input openings (21, 22) are communicated only in part with an outflow output opening (23), when the actuation lever (5) is displaced from a first end position by a user exerting a force below a predetermined limit value,
and
- unblocking movement of the actuation lever (5) when a user exerts a force equal or above the predetermined limit value to move it from the intermediate position towards a second end position.

The displacement limiting means comprise one or more stop elements (11) projecting from a wall (W) of a top element (6) of the cartridge and one or more protruding elements (12) projecting from an external surface (S) of the actuation lever (5).

## Description

### FIELD OF THE INVENTION

The present invention relates to a mixing cartridge with flow rate limitation, particularly for a single-grip mixing faucet, intended for selectively regulating and controlling the outflow of mixed water and temperature thereof, and more particularly to a mixing cartridge comprising flow rate limiting means comprising improved displacement limiting means for the actuation lever of the mixing cartridge.

### BACKGROUND OF THE INVENTION

It is known the use of mixing valves having mixing cartridges in single-grip faucets to mix separate inflows of hot and cold water and, in this manner, regulate the flow-rate and temperature of the mixed water leaving the faucet.

A typical mixing cartridge comprises:
- a cartridge body;
- a top element rotatably coupled to the cartridge body and that comprises a fulcrum;
- an actuation lever pivotable about said fulcrum between a first and a second end positions through intermediate positions;
- a fixed plate provided at least in part within the cartridge body, the fixed plate comprising input openings, for the separate inflow of hot and cold water and an output opening for the outflow of mixed water; and
- a movable element comprising a movable plate provided within the cartridge body and coupled to the actuation lever to be moved on or with respect to the fixed plate by acting on the actuation lever, said movable plate internally defining a mixing chamber open towards said fixed plate and which selectively blocks the communication of said input openings, with said output opening, when the actuation lever is at said first end position, and communicates the input openings, with the output opening, in part or completely, when the actuation lever is at said second end position and at least at some of said intermediate positions.

It is a well-known fact that users of such mixing cartridges often do not make proper use of them precisely because of their ease of use.

Specifically, it is common that the user place the actuation lever at its position of maximum flow rate regardless of the flow rate requirements. This inappropriate use causes an unnecessary energy and water spending.

To overcome these drawbacks, multiple solutions have been devised to limit the flow rate of these mixing cartridges.

Specifically, mixing cartridges with flow rate limitation are known in the art, which comprise flow rate limiting means comprising displacement limiting means for:
- blocking movement of the actuation lever at one of said intermediate positions at which the input openings, are communicated only in part with the output opening, when the actuation lever is displaced from said first end position by a user exerting a force thereon of a magnitude value below a predetermined limit value, and
- unblocking movement of the actuation lever when a user exerts a force thereon of a magnitude value equal or above said predetermined limit value to move it from said intermediate position towards said second end position.

Those displacement limiting means comprise different stop mechanisms linked to the actuation lever or to other internal elements of the mixing cartridge, and limit the flow rate of the outflow when a stop position is reached by the actuation lever, being necessary to apply an additional force to overcome said stop position provided by the stop mechanism.

Said stop mechanisms have several drawbacks derived from their arrangement, configuration, nature, robustness, mechanical stability, assembly and operation, which need to be overcome.

It is, therefore, necessary to provide an alternative to the state of the art which covers the gaps found therein, particularly focused on the above mentioned displacement limiting means, in order to provide a mixing cartridge with improved displacement limiting means to meet water-saving requirements implying a low water flow rate in order to meet high ecological standards.

### SUMMARY OF THE INVENTION

To that end, the present invention relates to a mixing cartridge with flow rate limitation, comprising, in a known manner:
- a cartridge body;
- a top element rotatably coupled to the cartridge body and that comprises a fulcrum;
- an actuation lever pivotable about said fulcrum between a first and a second end positions through intermediate positions;
- a fixed plate provided at least in part within the cartridge body, the fixed plate comprising input openings, for the separate inflow of hot and cold water and an output opening for the outflow of mixed water;
- a movable element comprising a movable plate provided within the cartridge body and coupled to the actuation lever to be moved on or with respect to the fixed plate by acting on the actuation lever, said movable plate internally defining a mixing chamber open towards said fixed plate and which selectively blocks the communication of said input openings, with said output opening, when the actuation lever is at said first end position, and communicates the input openings, with the output opening, in part or completely, when the actuation lever is at said second end position and at least at some of said intermediate positions; and
- flow rate limiting means comprising displacement limiting means for:
   - blocking movement of the actuation lever at one of said intermediate positions at which the input openings, are communicated only in part with the output opening, when the actuation lever is displaced from said first end position by a user exerting a force thereon of a magnitude value below a predetermined limit value, and
   - unblocking movement of the actuation lever when a user exerts a force thereon of a magnitude value equal or above said predetermined limit value to move it from said intermediate position towards said second end position.

In contrast to the known mixing cartridges, the mixing cartridge of the present invention comprises, in a characterizing manner, the displacement limiting means comprise at least one stop element projecting from a wall of the above cited top element and at least one protruding element projecting from an external surface of the actuation lever, opposite to said wall, and are configured and arranged such that:
- when the actuation lever, by being displaced by a user exerting thereon said force of a magnitude value below said predetermined limit value, reaches said intermediate position the protruding element abuts against said stop element at respective abutting regions, causing said blocking of the movement of the actuation lever; and
- when a user exerts said force of a magnitude value equal or above said predetermined limit value on the actuation lever to move it from said intermediate position towards said second end position, at least the abutting region of at least one of said protruding element and said at least one stop element moves away from the abutting region of the other, causing said unblocking of the movement of the actuation lever.

Thanks to the displacement limiting means of the mixing cartridge of the present invention, when the actuation lever is at said intermediate position (or stop position) at which tits movement is blocked, the user knows that a predetermined water outflow point has been reached, associated to a predetermined outflow flow rate, and that in order to obtain a higher flow rate he/she must apply a higher force to the actuation lever.

For an embodiment, the at least one stop element and the at least one protruding element are configured and arranged such that not only the abutting region but the whole stop element and/or protruding element move away from the other when the user exerts said force of a magnitude value equal or above the predetermined limit value on the actuation lever.

According to an embodiment, at least one of said at least one protruding element, said at least one stop element, said external surface of the actuation lever and, preferably, said wall of said top element has elastic properties.

The elastic properties of the protruding element and/or of the at least one stop element make the abutting region of the respective element move away from the abutting region of the other, when the user exerts said force of a magnitude value equal or above the predetermined limit value on the actuation lever, by means of elastic deformation.

For a preferred embodiment, the elastic properties of the wall of the top element and/or of the external surface of the actuation lever make that wall of the top element and/or that external surface of the actuation lever to elastically flex to move away from each other together with the protruding element and stop element respectively projecting therefrom, when the user exerts the above mentioned force of a magnitude value equal or above the predetermined limit value on the actuation lever.

According to a preferred embodiment, at least one of the protruding element and the at least one stop element has at least one cross-section whose external contour is convex shaped.

For an alternative embodiment, at least one of the protruding element and the at least one stop element has at least one cross-section whose external contour is ramp-shaped, wherein the ramp is tapered towards the most projecting portion of the protruding element and the at least one stop element.

For an embodiment, the at least one stop element is an elongated element having a longitudinal axis running in parallel with a longitudinal axis of the cartridge body or inclined with respect thereto at an angle below 45º, preferably below 30º and more preferably below 15º.

Regarding the protruding element, for an embodiment, at least the projection portion thereof has a spherical cap shape.

For an embodiment, at least one of the stop element and the protruding element is a separate part attached, respectively, to the wall of the top element or to the external surface of the actuation lever.

For another embodiment, at least one of the stop element and the protruding element is an integral portion of, respectively, the wall of the top element or the external surface of the actuation lever.

The two embodiments described just above can be alternative or complementary to one another, i.e. for an implementation both the protruding and the stop elements are separate parts, for another implementation both of them are integral portions and for another further implementation one of them is a separate part and the other is an integral portion of the element from which it projects.

According to an implementation of the embodiment for which the stop element is a separate part, the wall of the top element defines a housing into which the separate part constituting the stop element is partially housed such that a portion thereof including the above mentioned abutting region remains out of said housing.

For a variant of said implementation, the elongated element constituting the stop element has a cylindrical shape, said housing having also a cylindrical shape to house a lower portion of the elongated member there into.

According to an implementation of the embodiment for which the protruding element is a separate part, the external surface of the actuation lever is the external surface of a wall thereof which defines a housing into which the separate part constituting the protruding element is partially housed such that a portion thereof including said abutting region remains out of said housing.

For an embodiment, the mixing cartridge comprises a guide arrangement for guiding the protruding element towards and beyond the stop element when the actuation lever is moved between the first and the second end positions.

The separate part or separate parts constituting the stop element and/or the protruding element is or are made of metal or of another type of material, such as plastic.

Preferably, among other goals, in order to provide a higher mechanical stability to the assembly, the mixing cartridge of the present invention comprises two of the at least one stop element, each projecting from a respective of two opposite walls of the top element, and two of the at least one protruding element, each projecting from a respective of two external surfaces of the actuation lever, each of said two external surfaces remaining opposite to a respective of said two opposite walls.

A mixing valve including the mixing cartridge of the present invention, and a faucet including such a mixing vale are also further aspects proposed by the present invention.

### BRIEF DESCRIPTION OF THE FIGURES

In the following some preferred embodiments of the invention will be described with reference to the enclosed figures. They are provided only for illustration purposes without however limiting the scope of the invention.
Figure 1 is a side elevation cross section of the mixing cartridge of the present invention taken along a longitudinal cutting plane through the centre of the cartridge.
Figure 2 is an exploded perspective view of the actuation lever, the top element and the stop elements and protruding elements of the mixing cartridge of the present invention, for an embodiment.
Figure 3 is a perspective view showing the same elements of the mixing cartridge of the invention as shown in Figure 2, once mounted.

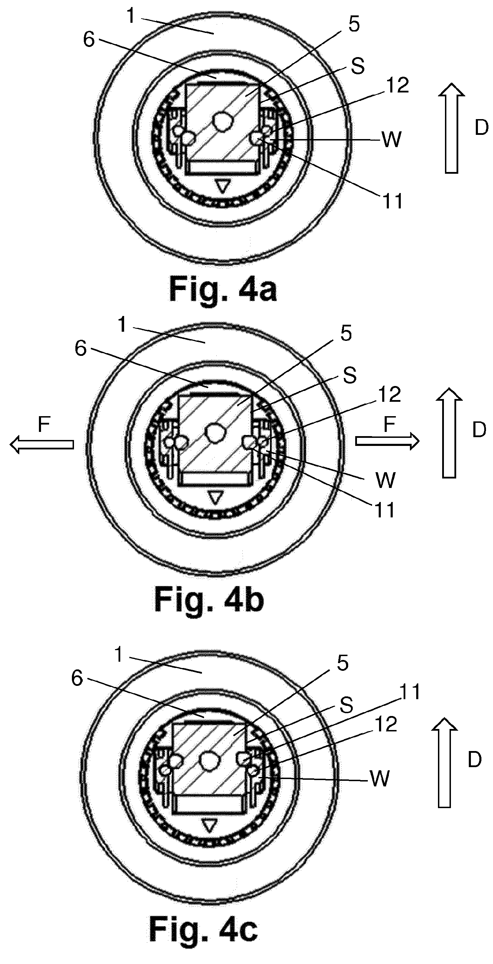

Figures 4a, 4b and 4c are respective plan cross section views taken along a transversal cutting plane through the stop elements and protruding elements of the mixing cartridge of the present invention, for an embodiment, representing the following consecutive positions: Figure 4a: a position at which the protruding elements abut against the stop elements and thus the flow rate is limited; Figure 4b: a position at which the protruding elements are pushing outwards the stop elements; Figure 4c: a position at which the protruding elements have overcome the stop elements and the flow rate is then not limited thereby.

### DESCRIPTION OF THE PREFERRED EMBODIMENTS

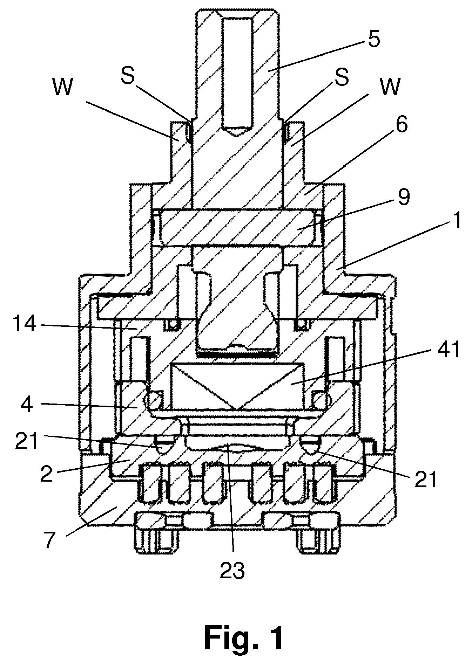

As shown in Figure 1, the mixing cartridge of the present invention comprises:
- a cartridge body 1;
- a top element 6 rotatably coupled to the cartridge body 1 and that comprises a fulcrum 9;
- an actuation lever 5 pivotable about said fulcrum 9 between a first and a second end positions through intermediate positions;
- a fixed plate 2 provided at least in part within the cartridge body 1, the fixed plate 2 comprising input openings 21, 22 for the separate inflow of hot and cold water and an output opening 23 for the outflow of mixed water; and
- a movable element 10 comprising a movable plate 4 provided within the cartridge body 1 and coupled to the actuation lever 5 to be moved on or with respect to the fixed plate 2 by acting on the actuation lever 5, said movable plate 4 internally defining a mixing chamber 41 open towards said fixed plate 2 and which selectively blocks the communication of said input openings 21, 22 with said output opening 23, when the actuation lever 5 is at said first end position, and communicates the input openings 21, 22 with the output opening 23, in part or completely, when the actuation lever 5 is at said second end position and at least at some of said intermediate positions.

The mixing cartridge of the present invention further comprises flow rate limiting means comprising displacement limiting means for:
- blocking movement of the actuation lever 5 at one of said intermediate positions (called stop position) at which the input openings 21, 22 are communicated only in part with the output opening 23, when the actuation lever 5 is displaced from said first end position by a user exerting a force thereon of a magnitude value below a predetermined limit value, and
- unblocking movement of the actuation lever 5 when a user exerts a force thereon of a magnitude value equal or above said predetermined limit value to move it from said intermediate position, or stop position, towards said second end position.

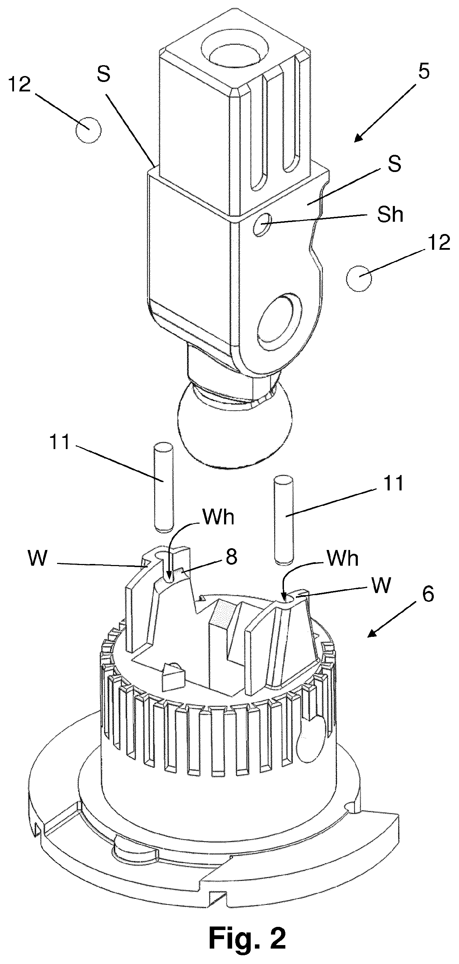

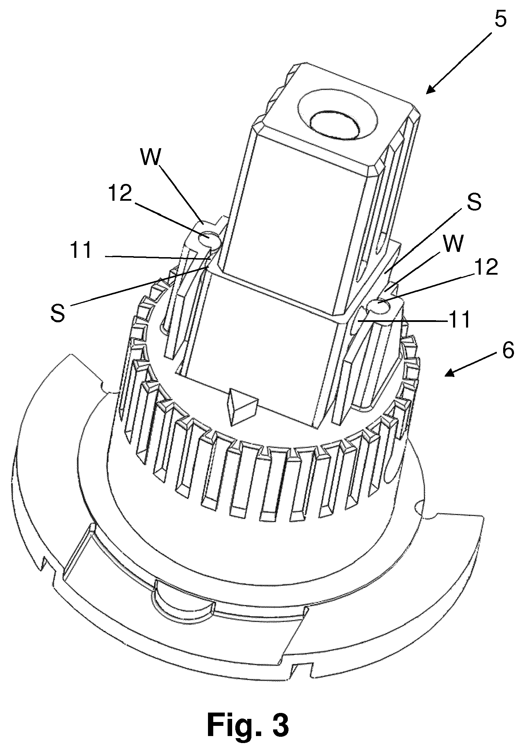

As clearly shown in Figures 2 and 3, for the embodiment there illustrated the above cited displacement limiting means comprise two stop elements 11 projecting from a respective of two opposite walls W of the top element 6 and two protruding elements 12 projecting from respective of two external surfaces S of the actuation lever 5, each of said two external surfaces S remaining opposite to a respective of said two opposite walls W.

Although different shapes for both the stop elements 11 and the protruding elements 12 are embraced by the present invention, for the illustrated embodiment the stop elements 11 have cylindrical shapes and the protruding elements 12 have spherical shapes.

The mixing cartridge of the present invention further comprises guide arrangements for guiding each protruding element 12 towards and beyond the stop element 11 when the actuation lever 5 is moved between the first and the second end positions. Said guide arrangement is constituted, for the embodiment illustrated in Figure 2, by a recessed curved portion 8 of the inner surface of wall W (although only one of said portions 8 is shown in the figure, there is one per wall).

A person skilled in the art could introduce changes and modifications in the embodiments described without departing from the scope of the invention as it is defined in the attached claims.

## Claims

1. Mixing cartridge with flow rate limitation, comprising:
- a cartridge body (1);
- a top element (6) rotatably coupled to the cartridge body (1) and that comprises a fulcrum (9);
- an actuation lever (5) pivotable about said fulcrum (9) between a first and a second end positions through intermediate positions;
- a fixed plate (2) provided at least in part within the cartridge body (1), the fixed plate (2) comprising input openings (21, 22) for the separate inflow of hot and cold water and an output opening (23) for the outflow of mixed water;
- a movable element (10) comprising a movable plate (4) provided within the cartridge body (1) and coupled to the actuation lever (5) to be moved on or with respect to the fixed plate (2) by acting on the actuation lever (5), said movable plate (4) internally defining a mixing chamber (41) open towards said fixed plate (2) and which selectively blocks the communication of said input openings (21, 22) with said output opening (23), when the actuation lever (5) is at said first end position, and communicates the input openings (21, 22) with the output opening (23), in part or completely, when the actuation lever (5) is at said second end position and at least at some of said intermediate positions; and
- flow rate limiting means comprising displacement limiting means for:
- blocking movement of the actuation lever (5) at one of said intermediate positions at which the input openings (21, 22) are communicated only in part with the output opening (23), when the actuation lever (5) is displaced from said first end position by a user exerting a force thereon of a magnitude value below a predetermined limit value, and
- unblocking movement of the actuation lever (5) when a user exerts a force thereon of a magnitude value equal or above said predetermined limit value to move it from said intermediate position towards said second end position;
**characterised in that** said displacement limiting means comprise at least one stop element (11) projecting from a wall (W) of said top element (6) and at least one protruding element (12) projecting from an external surface (S) of the actuation lever (5), opposite to said wall, and are configured and arranged such that:
- when the actuation lever (5), by being displaced by a user exerting thereon said force of a magnitude value below said predetermined limit value, reaches said intermediate position the protruding element (12) abuts against said stop element (11) at respective abutting regions, causing said blocking of the movement of the actuation lever (5); and
- when a user exerts said force of a magnitude value equal or above said predetermined limit value on the actuation lever (5) to move it from said intermediate position towards said second end position, at least the abutting region of at least one of said protruding element (12) and said at least one stop element (11) moves away from the abutting region of the other, causing said unblocking of the movement of the actuation lever (5).

2. Mixing cartridge according to claim 1, wherein said at least one stop element (11) and said at least one protruding element (12) are configured and arranged such that not only the abutting region but the whole stop element (11) and/or protruding element (12) move away from the other when the user exerts said force of a magnitude value equal or above the predetermined limit value on the actuation lever (5).

3. Mixing cartridge according to claim 1 or 2, wherein at least one of said at least one protruding element (12), said at least one stop element (11), said wall (W) of said top element (6) and said external surface (S) of the actuation lever (5) has elastic properties.

4. Mixing cartridge according to claim 3, wherein the elastic properties of the protruding element (12) and/or of the at least one stop element (11) make the abutting region of the respective element move away from the abutting region of the other, when the user exerts said force of a magnitude value equal or above the predetermined limit value on the actuation lever (5), by means of elastic deformation.

5. Mixing cartridge according to claim 3 or 4, wherein the elastic properties of the wall (W) of the top element (6) and/or of the external surface (S) of the actuation lever (5) make said wall (W) of the top element (6) and/or said external surface (S) of the actuation lever (5) to elastically flex to move away from each other together with the protruding element (12) and stop element (11) respectively projecting therefrom, when the user exerts said force of a magnitude value equal or above the predetermined limit value on the actuation lever (5).

6. Mixing cartridge according to any of the previous claims, wherein at least one of the protruding element (12) and the at least one stop element (11) has at least one cross-section whose external contour is convex shaped or ramp-shaped.

7. Mixing cartridge according to claim 6, wherein the at least one stop element (11) is an elongated element having a longitudinal axis running in parallel with a longitudinal axis of said cartridge body (1) or inclined with respect thereto at an angle below 45º, preferably below 30º and more preferably below 15º.

8. Mixing cartridge according to claim 6 or 7, wherein at least the projection portion of the protruding element (12) has a spherical cap shape.

9. Mixing cartridge according to any of the previous claims, wherein at least one of the stop element (11) and the protruding element (12) is a separate part attached, respectively, to the wall (W) of the top element (6) or to the external surface (S) of the actuation lever (5).

10. Mixing cartridge according to any of the previous claims, wherein at least one of the stop element (11) and the protruding element (12) is an integral portion of, respectively, the wall (W) of the top element (6) or the external surface (S) of the actuation lever (5).

11. Mixing cartridge according to claim 9, wherein the wall (W) of the top element (6) defines a housing (Wh) into which said separate part constituting the stop element (11) is partially housed such that a portion thereof including said abutting region remains out of said housing (Wh).

12. Mixing cartridge according to claim 11 when depending on claim 7, wherein the elongated element constituting the stop element (11) has a cylindrical shape, said housing (Wh) having also a cylindrical shape to house a lower portion of the elongated member there into.

13. Mixing cartridge according to claim 9, wherein the external surface (S) of the actuation lever (5) is the external surface of a wall thereof which defines a housing (Sh) into which said separate part constituting the protruding element (12) is partially housed such that a portion thereof including said abutting region remains out of said housing (Sh).

14. Mixing cartridge according to claim 9, wherein said separate part or parts is or are made of metal or plastic.

15. Mixing cartridge according to any of the previous claims, comprising two of said at least one stop element (11), each projecting from a respective of two opposite walls (W) of said top element (6), and two of said at least one protruding element (12), each projecting from a respective of two external surfaces (S) of the actuation lever (5), each of said two external surfaces (S) remaining opposite to a respective of said two opposite walls (W).
